# EUROPEAN PATENT SPECIFICATION

(11) **EP 3 489 048 B1**
(45) Date of publication and mention of the grant of the patent: **07.10.2020**
(21) Application number: 17831056.1
(22) Date of filing: 19.07.2017
(51) Int. Cl.: B60G 17/015, B60G 17/016, B62K 25/04, B60G 17/08, F16F 15/00, F16F 15/02

(54) **SUSPENSION APPARATUS AND VEHICLE EQUIPPED WITH SAME**
AUFHÄNGUNGSVORRICHTUNG UND DAMIT AUSGESTATTETES FAHRZEUG
APPAREIL DE SUSPENSION ET VÉHICULE ÉQUIPÉ DE CE DERNIER

(30) Priority: 20.07.2016 JP 2016142589
(43) Date of publication of application: 29.05.2019
(73) Proprietor: Yamaha Hatsudoki Kabushiki Kaisha, Iwata-shi, Shizuoka 438-8501 (JP)
(72) Inventor: SUZUKI Kazuo, Iwata-shi Shizuoka 438-8501 (JP); INOUE Yoichiro, Iwata-shi Shizuoka 438-8501 (JP)
(74) Representative: Stöckeler, Ferdinand
(86) International application number: PCT/JP2017/026144
(87) International publication number: WO 2018/016540

(56) References cited:
- JP-A- S59 117 932
- JP-A- 2005 153 875
- JP-A- 2005 153 875
- JP-A- 2012 215 220
- JP-A- 2013 224 129
- PREUKSCHAT A ET AL: "DampTronic - electronic damping adjustment system", THYSSENKRUPP TECHFORUM - ENGLISH EDITION, THYSSENKRUPP, DUSSELDORF, DE, no. 2, 1 December 2005 (2005-12-01), pages 28-33, XP001517597, ISSN: 1612-2771

## Description

### TECHNICAL FIELD

The present teaching relates to a suspension apparatus arranged between a sprung member and an unsprung member, as per the preamble of claim 1. An example of such a suspension apparatus is disclosed in JP 2005 153875 A.

### BACKGROUND ART

Conventionally, a suspension apparatus which is arranged between a sprung member and an unsprung member is known. For example, in Patent Document 1, as such a suspension apparatus, a structure that detects change in a vehicle height, which accompanies change in a live load or the like, by a vehicle height sensor and controls a damping force, based on a vehicle height detection signal that has been output from the vehicle height sensor is disclosed.

Specifically, in the suspension apparatus disclosed in Patent Document 1 described above, a resonance frequency is calculated based on a load of a vehicle, which is obtained from the vehicle height detection signal, and a damping force is set relatively high only in the vicinity of the resonance frequency. Thus, the suspension apparatus is capable of performing proper damping force control. Accordingly, regardless of a load state of a vehicle, accuracy of bottoming control can be improved by the above-described suspension apparatus, and therefore, ride quality and vibration control can be improved.

### CITATION LIST

### PATENT DOCUMENT

Patent Document 1: Japanese Patent Application Publication No. 01-202511

### SUMMARY OF INVENTION

### TECHNICAL PROBLEM

Incidentally, in the structure of Patent Document 1 described above, in order to perform proper damping force control, a vehicle height sensor that detects vehicle height is needed. In particular, in a case of a motorcycle or the like in which a sprung load is small when compared to a four-wheeled vehicle, a sprung resonance frequency changes due to change in the sprung load. Accordingly, when attempting to change a damping force in accordance with the resonance frequency, it is necessary to detect change in the sprung load with high accuracy. In order to do so, a vehicle height sensor that is capable of detecting the vehicle height with high accuracy is needed.

However, in a case in which a highly accurate vehicle height sensor, as described above, is provided, a structure of the apparatus is complicated, and accordingly, the size of the apparatus increases and also a weight of the apparatus increases. Increase in weight of the apparatus as described above is undesirable for vehicles. In particular, such increase is undesirable for motorcycles or the like in which a sprung load is small.

It is an object of the present teaching to achieve a suspension apparatus that can improve ride quality and vibration control without using a vehicle height sensor.

### SOLUTION TO PROBLEM

The present inventors earnestly examined a method by which improvement of ride quality and vibration control can be realized without using a vehicle height sensor as in Patent Document 1. As a result, mainly in view of improvement of ride quality, the present inventors focused on the skyhook theory that assumes a state in which a vehicle body or the like is suspended by an imaginary wire. By preforming a so-called skyhook control in which a damping force is controlled using the skyhook theory, the vehicle body can be maintained in a stable state at all times, and it is enabled to improve ride quality and vibration control.

In the above-described skyhook control, a necessary damping force is calculated using the skyhook theory and also, in damping force characteristics of a suspension apparatus, the damping force of the suspension apparatus is controlled such that each of a relative speed between a sprung member and an unsprung member and the damping force is in a predetermined range. Therefore, in the skyhook control, in general, a lower limit value of each of the predetermined ranges is determined in consideration of ride quality.

However, in the course of study by the present inventors, as a result of accumulation of experiment data related to suspension apparatuses, or the like, it was found that, in a range in which the relative speed is high and the damping force is small, bottoming or stretch tends to occur.

On the other hand, as a result of keen examinations by the present inventors about a range that contributes to ride quality in damping force characteristics of suspension apparatuses, damping force characteristics in a range in which the relative speed is low and the damping force is small largely influence ride quality.

Based on the foregoing, the present inventors found that, in skyhook control, by adjusting a lower limit of a damping force in damping force characteristics, bottoming and stretch can be restrained and also ride quality and vibration control can be improved.

A suspension apparatus according to an embodiment of the present teaching is a suspension apparatus that is arranged between a sprung member and an unsprung member. The suspension apparatus includes a damping unit that generates a damping force between the sprung member and the unsprung member and a damping force control unit that controls the damping force that is generated by the damping unit. The damping force control unit controls the damping force that is generated by the damping unit such that, on a lower limit boundary line drawn by a lower limit value of the damping force in a relationship between a relative movement speed between the sprung member and the unsprung member and the damping force, in a case in which a speed range of the movement speed is divided into three ranges of a low-speed range, a medium-speed range, and a high-speed range, a ratio of increase in magnitude of the damping force with respect to change in the movement speed in the medium-speed range is larger than a ratio of increase in magnitude of the damping force with respect to change in the movement speed in each of the other speed ranges. The lower limit boundary line in the low-speed range is minimum values of a damping force that can be generated by the damping unit and the lower limit boundary line in the high-speed range is values obtained by adding a predetermined amount to the minimum values. Thus, importance is put on the ride quality and vibration control of the vehicle in the low-speed range and, on the other hand, bottoming and stretch of the suspension apparatus can be restrained in the high-speed range.

As described above, by causing the damping unit to generate a damping force such that the ratio of increase in magnitude of the damping force with respect to change in the movement speed in the medium-speed range is larger than the ratio of increase in magnitude of the damping force with respect to change in the movement speed in each of the other speed ranges, ride quality and vibration control of a vehicle can be improved in the low-speed range and also bottoming and stretch can be restrained in the high-speed range.

Therefore, while restraining bottoming and stretch of the suspension apparatus, the ride quality and vibration control of the vehicle can be improved.

The damping force control unit may further include a damping force calculation unit that calculates the damping force that is generated by the damping unit, based on a plurality of parameters including at least the movement speed. The damping force control unit may compare a damping force that has been calculated by the damping force calculation unit and a damping force on the lower limit boundary line with one another and cause the damping unit to generate a damping force of a larger one of values of the damping forces.

Thus, the damping force that is caused to be generated by the damping unit of the suspension apparatus can be calculated in a simple manner. Then, the damping force that is generated by the damping unit can be made a damping force of the lower limit boundary line or higher.

Therefore, a suspension apparatus which can restrain bottoming and stretch and also improve the ride quality and vibration control of the vehicle can be realized.

The damping force control unit may control, if the damping force that has been calculated by the damping force calculation unit is a value of the lower limit boundary line or higher, the damping force that is generated by the damping unit such that the damping force is the calculated damping force, and control, on the other hand, if the damping force that has been calculated by the damping force calculation unit is a value that is lower than the lower limit boundary line, the damping force that is generated by the damping unit such that the damping force is the damping force of the lower limit boundary line.

Thus, the damping force that is generated by the damping unit can be made a damping force of the lower limit boundary line or higher.

The suspension apparatus may further include a sprung acceleration detection unit that detects acceleration of the sprung member in a gravity direction. The damping force calculation unit may calculate the damping force, based on an output value of the sprung acceleration detection unit.

Thus, a damping force that is caused to be generated by the damping unit of the suspension apparatus can be calculated in a simple manner.

The damping force control unit may control the damping force that is generated by the damping unit such that there are two or more inflection points on the lower limit boundary line.

Thus, while restraining bottoming and stretch of the suspension apparatus, the ride quality and vibration control of the vehicle can be improved.

The damping force control unit may control the damping force that is generated by the damping unit both at a time of compression when a distance between the sprung member and the unsprung member is relatively short and at a time of extension when the distance between the sprung member and the unsprung member is relatively long.

Thus, while restraining bottoming at the time of compression of the suspension apparatus and restraining stretch at the time of extension thereof, the ride quality and vibration control can be improved.

The predetermined amount may be set to a larger value as the movement speed increases. Thus, even when the movement speed is large, bottoming and stretch of the suspension apparatus can be effectively restrained.

The medium-speed range may be narrower than the high-speed range. Also, the medium-speed range may be narrower than the low-speed range.

The plurality of parameters in the suspension apparatus may include a parameter related to a vehicle traveling status.

The vehicle traveling status may include at least one of a vehicle speed, presence or absence of an accelerator operation, an accelerator operation amount, presence or absence of a brake operation, or a brake operation amount.

The terminology used herein is for the purpose of describing particular embodiments only and are not intended to be limiting the present teaching.

As used herein, the term "and/or" includes any and all combinations of one or more of the associated listed items.

As used herein, the terms "including," "comprising," or "having" and variations thereof specify the presence of stated features, steps, elements, components, and/or equivalents thereof, but do not preclude the presence or addition of one or more other steps, operations, elements, components, and/or groups thereof.

As used herein, the terms "mounted," "connected," "coupled," and/or equivalents thereof are used in a broad sense and include both of "direct" or "indirect" mounting, connection, and coupling. Furthermore, "connected" or "coupled" is not limited to physical or mechanical connections or couplings and may include direct or indirect connections or couplings.

Unless otherwise defined, all of terms (including technical and scientific terms) used herein have the same meaning as commonly understood by one skilled in the art to which the present teaching belongs.

Terms defined in commonly used dictionaries should be interpreted as having a meaning that is consistent with their meaning in the context of the relevant art and the present disclosure and will not be interpreted in an idealized or overly formal sense unless expressly so defined herein.

In describing the present teaching, it is understood that a number of techniques and steps are disclosed. Each of these has individual benefit and each can also be used in conjunction with one or more, or in some cases, all, of the other disclosed techniques.

Accordingly, for the sake of clarity, description of the present teaching will refrain from repeating every possible combination of the individual steps in an unnecessary fashion. Nevertheless, the specification and the scope of claims should be read with the understanding that such combinations are entirely within the scope of the present teaching.

Embodiments of a suspension apparatus according to the present teaching will be described herein.

In the following description, numerous specific examples will be described in order to provide a thorough understanding of the present teaching. It will be evident, however, to one skilled in the art that the present teaching may be implemented without these specific examples.

Therefore, the present disclosure is to be considered as an exemplification of the present teaching, and is not intended to limit the present teaching to the specific embodiments illustrated by the accompanying drawings or description below.

### [Ratio of Magnitude of Damping Force]

Note that a ratio of increase in magnitude of a damping force means a ratio of increase in an absolute value of the damping force.

### ADVANTAGEOUS EFFECTS OF INVENTION

Ride quality and vibration control can be improved by a suspension apparatus according to an embodiment of the present teaching.

### BRIEF DESCRIPTION OF DRAWINGS

[FIG. 1] FIG. 1 is a schematic diagram of a vehicle including a suspension apparatus according to an embodiment of the present teaching.
[FIG. 2] FIG. 2 is a diagram illustrating an outline structure of a damper device.
[FIG. 3] FIG. 3 is a diagram illustrating an outline structure of a suspension apparatus.
[FIG. 4] FIG. 4 is a diagram illustrating an outline structure of a control unit.
[FIG. 5] FIG. 5 is a graph illustrating an example of a lower limit boundary line of a damping force, which is set by a boundary line setting unit.
[FIG. 6] FIG. 6 is a graph illustrating an example of a relationship of a value of a current that is caused to flow in an actuator of the damper device with respect to a movement speed of a piston and a damping force.
[FIG. 7] FIG. 7 is a flowchart illustrating a flow of an operation of the control unit.
[FIG. 8] FIG. 8 is a graph illustrating an example of a lower limit boundary line in another embodiment.
[FIG. 9] FIG. 9 is a diagram illustrating an outline structure of the suspension apparatus with a graph illustrating an example of a lower limit boundary line of a damping force, which is set by the boundary line setting unit.

### DESCRIPTION OF EMBODIMENTS

Embodiments will be described below with reference to the accompanying drawings. Note that dimensions of a component member in each drawing do not closely represent actual dimensions of the component member, a dimension ratio of each component member, or the like.

### <Entire Structure>

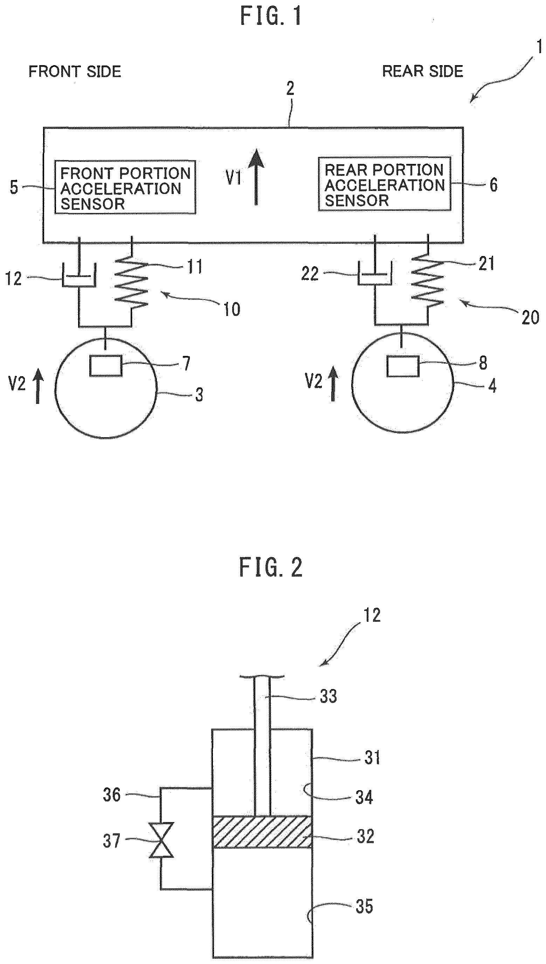

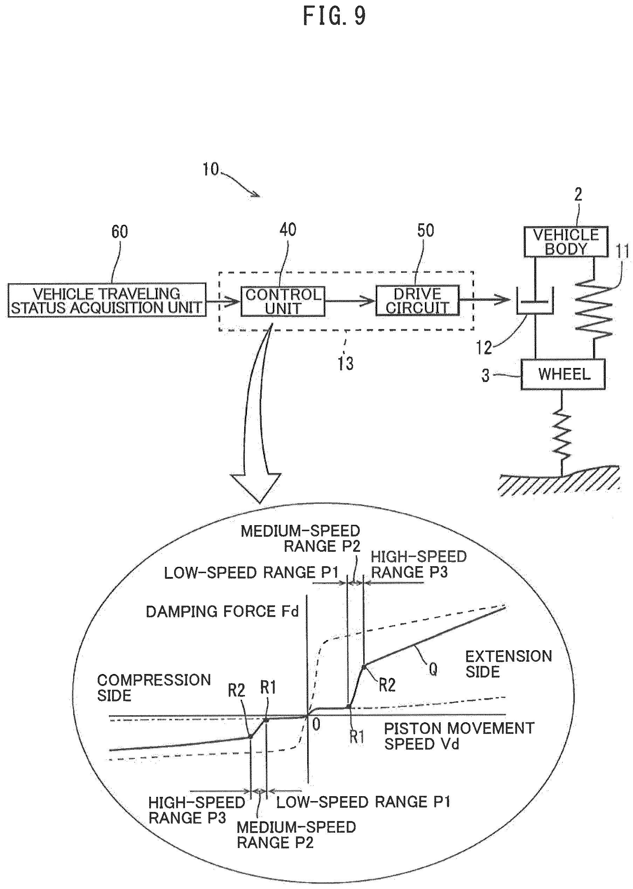

In FIG. 1, a schematic diagram of a vehicle 1 including suspension apparatuses 10, 20 according to a first embodiment of the present teaching is illustrated. In FIG. 9, an example of a lower limit boundary line of a damping force, which is set by the suspension apparatus 10, is illustrated, as well as an outline structure of the suspension apparatus 10.

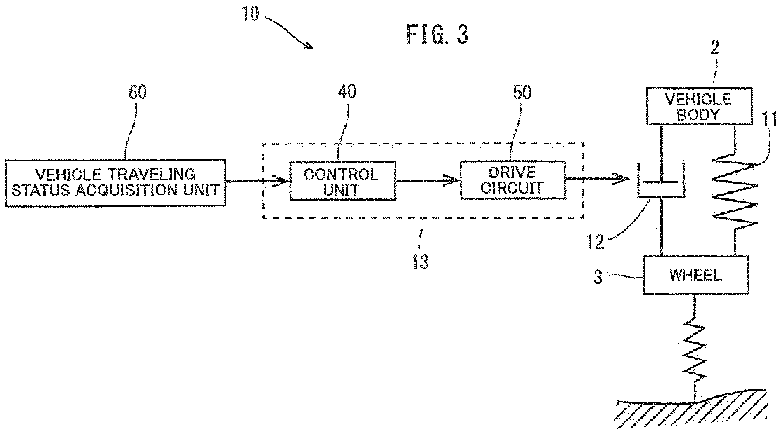

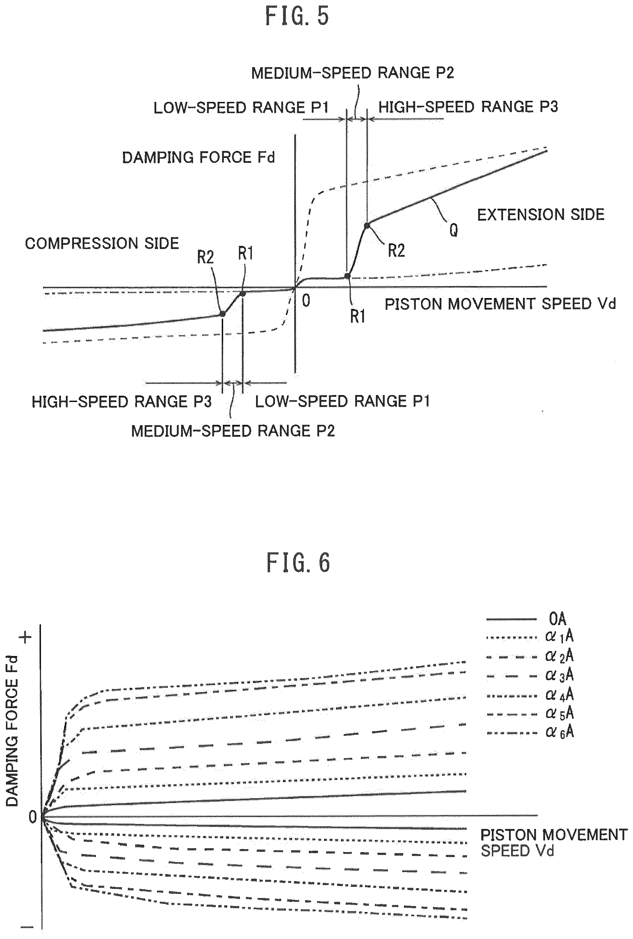

Note that an outline structure of the suspension apparatus 10 illustrated in FIG. 9 is similar to a structure which is enlarged and thus illustrated in FIG. 3. Therefore, the outline structure of the suspension apparatus 10 will be described later with reference to FIG. 3. Also, the lower limit boundary line of the damping force illustrated in FIG. 9 is similar to a lower limit boundary line which is enlarged and thus illustrated in FIG. 5. Therefore, the lower limit boundary line of the damping force, which is set by the suspension apparatus 10, will be described later with reference to FIG. 5.

The vehicle 1 includes a vehicle body 2 (a sprung member), wheels 3, 4 (unsprung members), and the suspension apparatuses 10, 20 that support the vehicle body 2 with respect to the wheels 3, 4. The suspension apparatuses 10, 20 elastically support the vehicle body 2 with respect to the wheels 3, 4, respectively, and generate a damping force. Note that, in FIG. 1, a left side is a front side of the vehicle 1 and a right side is a rear side of the vehicle 1. Therefore, for example, in a case in which the vehicle 1 is a two-wheeled vehicle, the wheel 3 is a front wheel and the wheel 4 is a rear wheel.

In the vehicle 1, a front portion acceleration sensor 5 and a rear portion acceleration sensor 6 (sprung acceleration detection units) are provided in the vehicle body 2. The front portion acceleration sensor 5 detects acceleration of the vehicle body 2 in an up-down direction (a gravity direction) in the front side. The rear portion acceleration sensor 6 detects acceleration of the vehicle body 2 in the up-down direction (the gravity direction) in the rear side.

Also, in the vehicle 1, a front wheel acceleration sensor 7 is provided closer to the wheel 3 than to a spring 11 of the suspension apparatus 10, which will be described later. In the vehicle 1, a rear wheel acceleration sensor 8 is provided closer to the wheel 4 than to a spring 21 of the suspension apparatus 20, which will be described later. The front wheel acceleration sensor 7 detects acceleration of the wheel 3 in the up-down direction. The rear wheel acceleration sensor 8 detects acceleration of the wheel 4 in the up-down direction.

Each of the suspension apparatuses 10, 20 includes a corresponding one of the springs 11, 21 that elastically support the vehicle body 2 with respect to the wheels 3, 4, respectively, and a corresponding one of damper devices 12, 22 (damping unit) that generate a damping force with respect to movements of the vehicle body 2 and the wheels 3, 4 in the up-down direction. In each of the suspension apparatuses 10, 20, a corresponding one of the springs 11, 21 and a corresponding one of the damper devices 12, 22 are provided in parallel. That is, each of the springs 11, 21 and the corresponding one of the damper devices 12, 22 are arranged in parallel between the vehicle body 2 and the corresponding one of the wheels 3, 4.

In FIG. 2, an outline structure of the damper device 12 is illustrated. Note that the damper device 22 that is arranged between the vehicle body 2 and the wheel 4 has the same structure as that of the damper device 12, and therefore, description thereof will be omitted.

As illustrated in FIG. 2, the damper device 12 includes a cylinder 31 that is filled with hydraulic oil and has a closed-end cylindrical shape, a piston 32 that slides with respect to an inner surface of the cylinder 31, and a piston rod 33 connected to the piston 32. The damper device 12 is configured such that the piston rod 33 is connected to the vehicle body 2 and, on the other hand, the cylinder 31 is connected to the wheel 3. A space inside the cylinder 31 is divided into two spaces 34, 35 by the piston 32. Each of the spaces 34, 35 is filled with the hydraulic oil. Note that the damper device 12 may be configured such that the piston rod 33 is connected to the wheel 3 and, on the other hand, the piston 32 is connected to the vehicle body 2.

The damper device 12 further includes an orifice passage 36 that connects the two spaces 34, 35 formed inside the cylinder 31 to one another and an adjusting valve 37 that is capable of adjusting a degree of an opening of the orifice passage 36.

As described above, the orifice passage 36 that connects the two spaces 34, 35 to one another is provided, and thereby, when the piston 32 moves in the cylinder 31, the hydraulic oil moves in the two spaces 34, 35 in the cylinder 31. Thus, when the piston 32 moves in the cylinder 31 due to relative movements of the vehicle body 2 and the wheel 3, a damping force is generated. Note that the orifice passage 36 may be provided in the cylinder 31 or may be provided in the piston 32.

Also, the adjusting valve 37 is provided in the orifice passage 36, and thereby, an amount of flow of the hydraulic oil in the orifice passage 36 can be adjusted. That is, the amount of the hydraulic oil flowing between the spaces 34, 35 through the orifice passage 36 can be adjusted by adjusting a degree of an opening of the adjusting valve 37 provided in the orifice passage 36. Thus, the damping force that is generated in the damper device 12 can be adjusted by adjusting the degree of the opening of the adjusting valve 37.

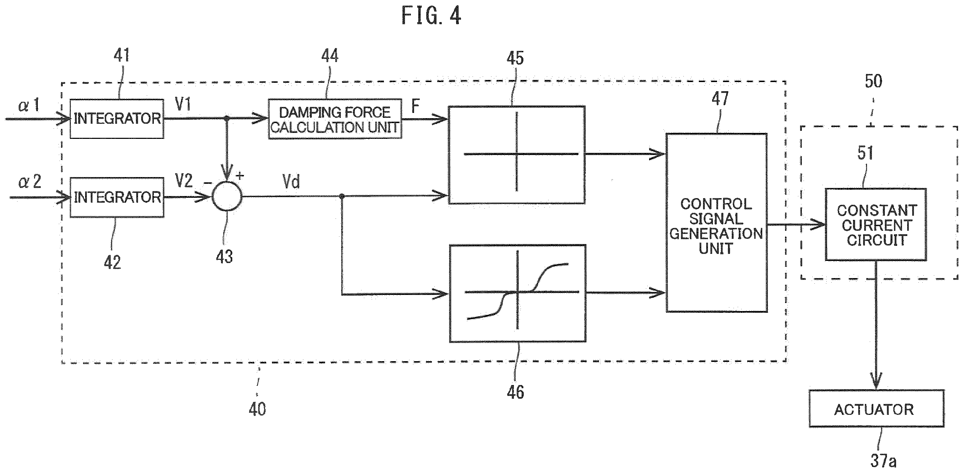

Note that the damper device 12 includes an actuator 37a (see FIG. 4) which drives a valve body of the adjusting valve 37, which is not illustrated. The degree of the opening of the adjusting valve 37 can be adjusted by supplying a current to the actuator 37a.

Although, in this embodiment, the adjusting valve 37 is an area control valve that controls a passage area of the orifice passage 36, the adjusting valve 37 is not limited thereto and may be any structure, such as a pressure control valve that controls a pressure, or the like, as long as the adjusting valve 37 has a structure that is capable of adjusting the amount of flow of the hydraulic oil.

In FIG. 3, an outline structure of the suspension apparatus 10 that supports the vehicle body 2 with respect to the wheel 3 is illustrated. Note that, although, in FIG. 3, for explanation, only the suspension apparatus 10 that supports the vehicle body 2 with respect to the wheel 3 is illustrated, a structure of the suspension apparatus 20 that supports the vehicle body 2 with respect to the wheel 4 is similar thereto. In the following description, only the suspension apparatus 10 will be described and description of the suspension apparatus 20 will be omitted.

As illustrated in FIG. 3, the suspension apparatus 10 includes a control device 13 that controls a damping force that the damper device 12 is caused to generate. The control device 13 controls the degree of the opening of the adjusting valve 37 of the damper device 12.

Specifically, the control device 13 includes a control unit 40 (a damping force control unit) and a drive circuit 50. The control unit 40 generates a control signal that is output to the drive circuit 50, based on information (for example, accelerations and displacements of the vehicle and the wheels in the up-down direction, a vehicle speed, an accelerator operation, a brake operation, or the like) related to a vehicle traveling status that has been acquired by a vehicle traveling status acquisition unit 60. The control signal is a signal that is used for controlling the adjusting valve 37 of the damper device 12 in accordance with the skyhook theory, as will be described later. A detailed structure of the control unit 40 will be described later. Note that the vehicle traveling status acquisition unit 60 may be provided in the control device 13 or may be provided in some other portion than the control device 13 in the vehicle 1.

The drive circuit 50 generates a predetermined current that is used for driving the actuator 37a (see FIG. 4) of the adjusting valve 37 of the damper device 12, based on the control signal that has been output from the control unit 40. The drive circuit 50 includes a constant current circuit 51 illustrated in FIG. 4. The constant current circuit 51 outputs a constant current in accordance with a signal that is input.

### (Control Unit)

Next, with reference to FIG. 4, a structure of the control unit 40 will be described. Note that the suspension apparatus 20 has a similar control unit to the control unit 40. Therefore, description of the control unit of the suspension apparatus 20 will be omitted.

An acceleration signal α1 is input to the control unit 40 from the front portion acceleration sensor 5, and also, an acceleration signal a2 is input to the control unit 40 from the front wheel acceleration sensor 7. Note that an acceleration signal is input to the control unit of the suspension apparatus 20, which is not illustrated, from the rear portion acceleration sensor 6, and also, an acceleration signal is input to the control unit from the rear wheel acceleration sensor 8.

The control unit 40 calculates a speed difference (speed of the piston 32 of the damper device 12) in the up-down direction (the gravity direction) between the vehicle body 2 and each of the wheels 3, 4, based on the acceleration signals α1, α2 that have been input, and also, calculates a damper force that the damper device 12 is caused to generate using the speed difference. Then, the control unit 40 outputs a control signal in accordance with the damping force that has been calculated.

Note that the control unit 40 controls the damping force both at the time of compression when a distance between the vehicle body 2 and each of the wheels 3, 4 in the suspension apparatus 10 is relatively short and at the time of extension when the distance between the vehicle body 2 and each of the wheels 3, 4 in the suspension apparatus 10 is relatively long. Thus, while restraining bottoming at the time of compression of each of the suspension apparatus 10, 20 and restraining stretch at the time of extension thereof, ride quality and vibration control of the vehicle 1 can be improved.

Specifically, the control unit 40 includes integrators 41, 42, a speed difference calculation unit 43, a damping force calculation unit 44, a damping characteristic acquisition unit 45, a boundary line setting unit 46, and a control signal generation unit 47.

Each of the integrators 41, 42 calculates a corresponding one of movement speeds V1, V2 from a corresponding one of the acceleration signals α1, a2 that have been input to the control unit 40. Thus, the movement speeds V1, V2 of the vehicle body 2 and the wheel 3 in the up-down direction can be calculated.

The speed difference calculation unit 43 calculates a difference between the movement speed V1 that has been calculated by the integrator 41 and the movement speed V2 that has been calculated by the integrator 42. Thus, a difference between the movement speed V1 of the vehicle body 2 and the movement speed V2 of the wheel 3 can be calculated, that is, a movement speed Vd of the piston 32 with respect to the cylinder 31 can be calculated in the damper device 12 arranged between the vehicle body 2 and the wheel 3.

The damping force calculation unit 44 calculates a calculation value F of a damping force that the damper device 12 is caused to generate using the movement speed V1 of the vehicle body 2. Specifically, assuming that a damping coefficient is C, the damping force calculation unit 44 calculates a calculated value F of the damping force in accordance with F = C × V1. Note that the damping coefficient C is set in accordance with the vehicle 1. The damping coefficient C may be set in accordance with a state (for example, a flat road surface, a rough road surface, or the like) of a road on which the vehicle 1 travels.

Note that the damping force calculation unit 44 may be configured to calculate the calculated value F of the damping force, based on a plurality of parameters including the movement speed V1. The plurality of parameters includes at least one of a vehicle speed of the vehicle 1, presence or absence of an accelerator operation, an accelerator operation amount, presence or absence of a brake operation, or a brake operation amount. The accelerator operation amount is a value that is grasped based on a rotation angle, a degree of an accelerator opening, or the like of an accelerator when an accelerator operation is performed. The brake operation amount is a stroke amount (for example, an angle) when a brake lever (or a brake pedal) is operated or, in a case of a hydraulic brake, a value that is grasped based on a value of oil pressure when the brake operation is performed or the like.

The damping characteristic acquisition unit 45 associates the movement speed Vd of the piston 32, which has been calculated by the speed difference calculation unit 43, and the calculated value F of the damping force, which has been calculated by the damping force calculation unit 44, with one another.

The boundary line setting unit 46 sets, in a relationship between the movement speed Vd of the piston 32 and a damping force Fd that the damper device 12 is caused to generate, a lower limit value of the damping force Fd. Specifically, the boundary line setting unit 46 sets a lower limit boundary line Q as the lower limit value of the damping force Fd that varies with respect to the movement speed Vd of the piston 32. An example of the lower limit boundary line Q that is set by the boundary line setting unit 46 is illustrated in FIG. 5. Note that, in FIG. 5, a broken line indicates maximum values of a damping force that can be generated in view of the structure of the damper device 12 and an alternate long and short dashed line is minimum values of a damping force that can be generated in view of the structure of the damper device 12.

As illustrated in FIG. 5, on the lower limit boundary line Q, a speed range of the movement speed Vd of the piston 32 can be divided into three ranges of a low-speed range PI, a medium-speed range P2, and a high-speed range P3. In a case in which the speed range of the movement speed Vd is divided in the above-described manner, a ratio of change in (a ratio of increase in magnitude of) the damping force Fd with respect to change in the movement speed Vd in the medium-speed range P2 is larger than a ratio of change in (a ratio of increase in magnitude of) the damping force Fd with respect to change in the movement speed Vd in each of the other speed ranges P1, P3. In other words, the low-speed range P1, the medium-speed range P2, and the high-speed range P3 are defined by dividing the lower limit boundary line Q by three ranges with different ratios of changes in damping force Fd with respect to change in the movement speed Vd. Therefore, as illustrated in FIG. 5, the lower limit boundary line Q of the damping force Fd includes two or more inflection points R1, R2. Each of the inflection points R1, R2 is a point at which the ratio of change in the damping force Fd with respect to change in the movement speed Vd varies. In an example of FIG. 5, the inflection point R1 is an inflection point located at a boundary of the low-speed range P1 and the medium-speed range P2 and the inflection point R2 is an inflection point located at a boundary of the medium-speed range P2 and the high-speed range P3. The lower limit boundary line Q may include three or more inflection points.

Note that, on the lower limit boundary line Q, in a range (a very low-speed range) in which a speed is close to zero in the low-speed range P1, the ratio of change in (the ratio of increase in magnitude of) the damping force Fd with respect to change in the movement speed Vd is larger than the ratio of the above-described change (the ratio of increase in magnitude) in each of the other ranges.

Moreover, the lower limit boundary line Q in the low-speed range P1 is minimum values (the alternate long and short dashed line in FIG. 5) of the damping force that can be generated in view of the structure of the damper device 12 and the lower limit boundary line Q in the high-speed range P3 is values obtained by adding a predetermined amount to the minimum values. The predetermined amount is determined to be a value at which bottoming or stretch does not occur in the suspension apparatus 10 in various road surface statuses and under various travel conditions, in accordance with the vehicle 1. The predetermined amount may be set to, for example, a larger value as the movement speed Vd increases. Note that the predetermined amount may be a fixed value, or may be set to a smaller value as the movement speed Vd increases.

Note that, in the piston movement speed Vd, the medium-speed range P2 is narrower than a range including at least the high-speed range P3. Also, the medium-speed range P2 is narrower than a range including at least the low-speed range P1.

The control signal generation unit 47 illustrated in FIG. 4 generates a control signal using the movement speed Vd and the damping force Fd that have been associated with one another in the damping characteristic acquisition unit 45 and the lower limit boundary line Q that has been set by the boundary line setting unit 46. Specifically, the control signal generation unit 47 compares the calculated value F of the damping force at the movement speed Vd, which has been associated by the damping characteristic acquisition unit 45, with a lower limit value of the damping force, which is obtained from the lower limit boundary line Q using the movement speed Vd and selects a larger one of the calculated value F and the lower limit value as the damping force Fd that the damper device 12 is caused to generate. Then, the control signal generation unit 47 generates a control signal that is used for causing the constant current circuit 51 to output a predetermined current using the movement speed Vd and the damping force Fd.

In this case, a current that is caused to flow in the actuator 37a of the damper device 12 has a relationship illustrated in FIG. 6 with respect to the movement speed Vd of the piston 32 of the damper device 12 and the damping force Fd that the damper device 12 is caused to generate (solid lines, dashed lines, alternate long and short dashed lines, and long-dashed double-short-dashed lines in FIG. 6). Note that, in FIG. 6, α1 < α2 < α3 < α4 < α5 < α6. That is, when the damping force Fd and the movement speed Vd are large, it is necessary to increase the current that is caused to flow in the actuator 37a of the damper device 12.

In this embodiment, in the damper device 12, when the current that is caused to flow in the actuator 37a is increased, the damping force Fd becomes large. However, the damper device 12 may be configured such that, when the current that is caused to flow in the actuator 37a is reduced, the damping force Fd becomes large.

The control signal generation unit 47 calculates the current that is caused to flow in the actuator 37a of the damper device 12 from the movement speed Vd of the piston 32 and the damping force Fd, based on the relationship illustrated in FIG. 6.

The control signal that has been output from the control unit 40 is input to the constant current circuit 51. The constant current circuit 51 outputs a current in accordance with the control signal that has been input. The current that has been output from the constant current circuit 51 is supplied to the actuator 37a of the damper device 12. Thus, the actuator 37a is driven to change the degree of the opening of the adjusting valve 37.

### (Operation of Control Device)

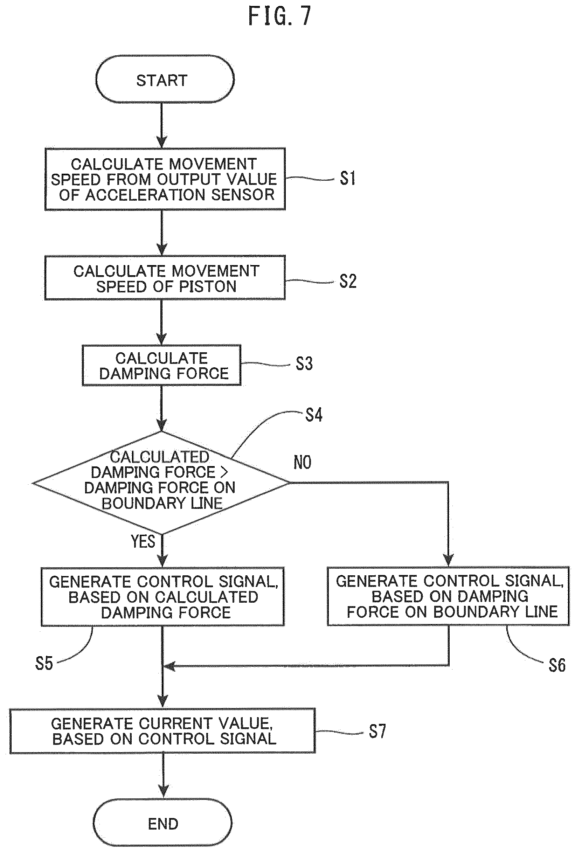

Next, with reference to a flow illustrated in FIG. 7, an operation of the control device 13 which has the above-described structure will be described.

When the flow illustrated in FIG. 7 starts, in Step S1, the movement speed V1 is calculated from an output value α1 of the front portion acceleration sensor 5 by the integrator 41, and also, the movement speed V2 is calculated from an output value a2 of the front wheel acceleration sensor 7 by the integrator 42.

In subsequent Step S2, a difference in movement speed in the up-down direction between the vehicle body 2 and the wheel 3 is calculated by the speed difference calculation unit 43. That is, in this Step S2, the movement speed Vd of the piston 32 of the damper device 12 located between the vehicle body 2 and the wheel 3 is calculated.

In Step S3, the calculated value F of a damping force that the damper device 12 is caused to generate is calculated, based on the movement speed V1 of the vehicle body 2, by the damping force calculation unit 44.

In subsequent Step S4, after associating the calculated value F of the damping force, which has been calculated by the damping characteristic acquisition unit 45 in Step 3, and the movement speed Vd of the piston 32 with one another, the control signal generation unit 47 compares the calculated value F with a lower limit value of a damping force that is obtained from the lower limit boundary line Q that has been set by the boundary line setting unit 46.

In this Step S4, if the calculated value F of the damping force, which has been calculated in Step S3, is larger than the lower limit value of the damping force, which is obtained from the lower limit boundary line Q that has been set by the boundary line setting unit 46 (in a case of YES), the process proceeds to Step S5 and the control signal generation unit 47 assumes that the calculated value F is the damping force Fd that is to be generated by the damper device 12, generates a control signal, based on the damping force Fd, and outputs the control signal.

On the other hand, if the damping force that has been calculated in Step S3 is not larger than the lower limit value of the damping force, which is obtained from the lower limit boundary line Q that has been set by the boundary line setting unit 46 (in a case of NO), the process proceeds to Step S6 and the control signal generation unit 47 assumes that the lower limit value is the damping force Fd that is generated by the damper device 12, generates a control signal, based on the damping force Fd, and outputs the control signal.

The control signal that is generated by the control signal generation unit 47 is a control signal that corresponds to a damping force of the lower limit boundary line Q that has been set by the boundary line setting unit 46 or higher. Therefore, it is possible to cause the damper device 12 to generate a damping force of the lower limit boundary line Q that has been set by the boundary line setting unit 46 or higher.

In this embodiment, the lower limit boundary line Q that is set by the boundary line setting unit 46 has the characteristics that have been described.

As described above, the control signal generation unit 47 controls a damping force that is generated in the damper device 12 such that, on the lower limit boundary line Q that is drawn by the lower limit value of the damping force Fd in the relationship between the movement speed Vd (a relative movement speed between the sprung member and the unsprung member) and the damping force Fd, in a case in which the speed range of the movement speed Vd is divided into three ranges of the low-speed range P1, the medium-speed range P2, and the high-speed range P3, the ratio of change in (the ratio of increase in magnitude of) the damping force Fd with respect to change in the movement speed Vd in the medium-speed range P2 is larger than the ratio of change in (the ratio of increase in magnitude of) the damping force Fd with respect to change in the movement speed Vd in each of the other speed ranges P1, P3.

In Steps S5, S6, in generating a control signal, the control signal generation unit 47 generates, based on the movement speed Vd of the piston 32 and the damping force Fd that has been selected by the control signal generation unit 47, a control signal that causes the drive circuit 50 to output a necessary current for driving the actuator 37a of the damper device 12.

In Step S7 to which the process proceeds after Steps S5, S6, the constant current circuit 51 of the drive circuit 50 outputs a predetermined current to the actuator 37a that drives the adjusting valve 37 of the damper device 12 in accordance with the control signal that has been output from the control signal generation unit 47. Thus, the degree of the opening of the adjusting valve 37 can be set to a predetermined degree of the opening.

Thereafter, this flow is terminated (ended).

Based on the foregoing, in this embodiment, the suspension apparatus 10 arranged between the vehicle body 2 and the wheel 3 includes the damper device 12 that generates a damping force, the speed difference calculation unit 43 that calculates a relative movement speed Vd (a relative movement speed between the sprung member and the unsprung member) in the gravity direction between the vehicle body 2 and the wheel 3, and the control signal generation unit 47 that controls the damping force Fd that is generated in the damper device 12 such that the damping force Fd that is generated in the damper device 12 is a value determined in accordance with parameters including at least the movement speed Vd.

The control signal generation unit 47 controls the damping force Fd that is generated in the damper device 12 such that, on the lower limit boundary line Q drawn by the lower limit value of the damping force Fd in the relationship between the movement speed Vd of the piston 32 and the damping force Fd, in a case in which the speed range of the movement speed Vd is divided into three ranges of the low-speed range P1, the medium-speed range P2, and the high-speed range P3, the ratio of change in (the ratio of increase in magnitude of) the damping force Fd with respect to change in the movement speed Vd in the medium-speed range P2 is larger than the ratio of change in (the ratio of increase in magnitude of) the damping force Fd with respect to change in the movement speed Vd in each of the other speed ranges P1, P3.

As has been described above, the ride quality and vibration control of the vehicle 1 can be improved by controlling the damping force Fd that is generated in the damper device 12 such that the damping force Fd that is generated in the damper device 12 is a value that has been determined in accordance with parameters including the relative movement speed Vd between the vehicle body 2 and the wheel 3.

Specifically, when the relative movement speed Vd between the vehicle body 2 and the wheel 3 is in the medium-speed range P2 and in the high-speed range P3, a relatively high damping force Fd is ensured even when other parameters are any values, and accordingly, the damping force Fd in the low-speed range P1 can be set relatively low. Thus, as a result of control of the damping force Fd, even when the value of the damping force Fd, which is calculated, is a value of the lower limit boundary line Q or higher and the damping force in the low-speed range P1 is relatively low, bottoming and stretch of the suspension apparatus 10 can be restrained.

Therefore, while restraining bottoming and stretch of the suspension apparatus 10, the ride quality and vibration control of the vehicle 1 can be improved.

Moreover, the suspension apparatus 10 further includes the front portion acceleration sensor 5 that detects acceleration of the vehicle body 2 in the gravity direction. The control signal generation unit 47 compares the calculated value F of the damping force, which is calculated based on an output value of the front portion acceleration sensor 5, and the lower limit value of the damping force on the lower limit boundary line Q with one another and causes the damper device 12 to generate a damping force of the larger one of the calculated value F and the lower limit value as the damping force Fd.

Thus, the damping force Fd that the damper device 12 of the suspension apparatus 10 is caused to generate can be calculated in a simple manner. Then, the damping force Fd that is generated by the damper device 12 can be made a damping force of the lower limit boundary line Q or higher.

Therefore, the suspension apparatus 10 that can restrain bottoming and stretch and also improve the ride quality and vibration control of the vehicle 1 can be realized.

Moreover, the control signal generation unit 47 controls the damping force Fd that is generated in the damper device 12 such that there are two or more inflection points on the lower limit boundary line Q. Thus, while restraining bottoming and stretch of the suspension apparatus 10, the ride quality and vibration control of the vehicle 1 can be improved.

Moreover, the suspension apparatus 10 further includes the damping force calculation unit 44 that calculates the damping force that is generated in the damper device 12, based on a plurality of parameters including at least the movement speed Vd. If the calculated damping force is a value of the lower limit boundary line Q or higher, the control signal generation unit 47 controls the damping force Fd that is generated in the damper device 12 such that the damping force Fd is the above-described damping force and, on the other hand, if the calculated damping force is a value that is lower than the lower limit boundary line Q, controls the damping force Fd that is generated in the damper device 12 such that the above-described damping force is a damping force corresponding to the lower limit boundary line Q.

Thus, the damping force Fd that is generated in the damper device 12 can be made a damping force of a value of the damping force of the lower limit boundary line Q or higher.

Also, the control signal generation unit 47 controls the damping force that is generated in the damper device 12 both at the time of compression when the distance between the vehicle body 2 and the wheel 3 in the suspension apparatus 10 is relatively short and at the time of extension when the distance between the vehicle body 2 and the wheel 3 in the suspension apparatus 10 is relatively long. Therefore, while restraining bottoming at the time of compression of the suspension apparatus 10 and restraining stretch at the time of extension thereof, the ride quality and vibration control of the vehicle 1 can be improved.

The lower limit boundary line Q in the low-speed range P1 is minimum values of the damping force of the damper device 12 and the lower limit boundary line Q in the high-speed range P3 is values obtained by adding a predetermined amount to the minimum values. Thus, in a range in which the movement speed Vd of the piston 32 is small, importance is put on the ride quality and vibration control of the vehicle and, on the other hand, in a range in which the movement speed Vd is large, bottoming and stretch of the suspension apparatus 10 can be restrained.

The above-described predetermined amount is set to a larger value as the movement speed Vd increases. Thus, even when the movement speed Vd of the piston 32 is large, bottoming and stretch of the suspension apparatus 10 can be effectively restrained.

The medium-speed range P2 is narrower than a range including at least the high-speed range P3.

Moreover, the medium-speed range P2 is narrower than a range including at least the low-speed range P1.

The plurality of parameters includes a parameter related to a vehicle traveling status. Thus, considering the vehicle travelling status, the damping force that is generated in the damper device 12 can be calculated.

The vehicle travelling status includes at least one of the vehicle speed, presence or absence of an acceleration operation, an acceleration operation amount, presence or absence of a brake operation, or a brake operation amount.

Note that, although, in the above-described description, the suspension apparatus 10 arranged between the vehicle body 2 and the wheel 3 has been described, the suspension apparatus 20 arranged between the vehicle body 2 and the wheel 4 also has a similar structure to that of the suspension apparatus 10, and therefore, has similar working effects to those of the suspension apparatus 10.

### (Other Embodiments)

An embodiment of the present teaching has been described above, but the above-described embodiment is merely an illustrative example of a preferred embodiment of the present teaching. Therefore, the present teaching is not limited to the above-described embodiment and the above-described embodiment can be appropriately modified and implemented without departing from the gist of the teaching.

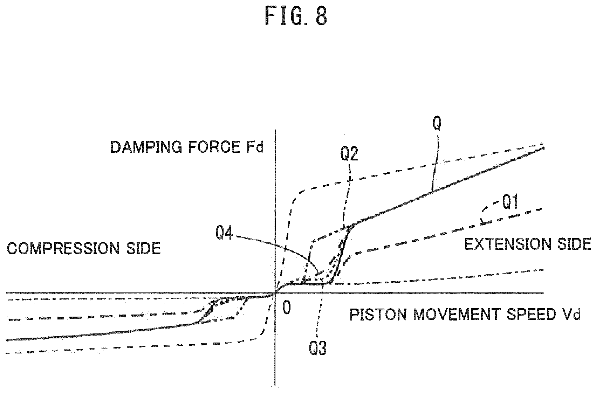

In the above-described embodiment, as the lower limit boundary line Q of the damping force that the damper device 12 is caused to generate, the boundary line illustrated in FIG. 5 is set by the boundary line setting unit 46. However, the lower limit boundary line Q is not limited to the boundary line illustrated in FIG. 5 and, as illustrated by Q1 to Q4 in FIG. 8, the ratio of change in (the ratio of increase in magnitude of) the damping force Fd with respect to change in the movement speed Vd in the medium-speed range may be larger than the ratio of change in (the ratio of increase in magnitude of) the damping force Fd with respect to change in the movement speed Vd in each of the other speed ranges.

Also, in the above-described embodiment, the lower limit boundary line Q in the low-speed range P1 is minimum values of the damping force of the damper device 12, and also, the lower limit boundary line Q in the high-speed range P3 is values obtained by adding a predetermined amount to the minimum values. However, as described above, the lower limit boundary line Q may be a boundary line in any form as long as the ratio of change in (the ratio of increase in magnitude of) the damping force Fd with respect to change in the movement speed Vd in the medium-speed range is larger than the ratio of change in (the ratio of increase in magnitude of) the damping force Fd with respect to change in the movement speed Vd in each of the other speed ranges.

Furthermore, in the above-described embodiment, the medium-speed range P2 is narrower than the low-speed range P1 and the high-speed range P3. However, the medium-speed range P2 may be equal to the low-speed range P1 and the high-speed range P3 or may be wider than the low-speed range P1 and the high-speed range P3.

In the above-described embodiment, the control signal generation unit 47 compares the calculated value F of the damping force, which is calculated based on an output value of the front portion acceleration sensor 5, and a lower limit value of the damping force on the lower limit boundary line Q with one another and causes the damper device 12 to generate a damping force of a larger one of the calculated value F and the lower limit value as the damping force Fd. However, the control signal generation unit 47 may be configured to have any structure as long as the structure is a structure in which, on the lower limit boundary line Q drawn by the lower limit value of the damping force in the relationship between the movement speed Vd of the piston 32 and the damping force Fd, in a case in which the speed range of the movement speed Vd is divided into three ranges of the low-speed range P1, the medium-speed range P2, and the high-speed range P3, the damping force that is generated in the damper device 12 can be controlled such that the ratio of change in (the ratio of increase in magnitude of) the damping force Fd with respect to change in the movement speed Vd in the medium-speed range P2 is larger than the ratio of change in (the ratio of increase in magnitude of) the damping force Fd with respect to change in the movement speed Vd in each of the other speed ranges PI, P3.

In the above-described embodiment, the control signal generation unit 47 controls the damping force that is generated in the damper device 12 both at the time of compression when the distance between the vehicle body 2 and the wheel 3 in the suspension apparatus 10 is relatively short and at the time of extension when the distance between the vehicle body 2 and thee wheel 3 in the suspension apparatus 10 is relatively long. However, the control signal generation unit 47 may be configured to control the damping force that is generated in the damper device 12 at only one of the time of compression and the time of extension.

In the above-described embodiment, the vehicle 1 has been described as a two-wheeled vehicle, but the vehicle 1 may have any structure, such as a three-wheeled vehicle, a four-wheeled vehicle, or the like, as long as the structure is a structure in which a suspension apparatus is arranged between a vehicle body and a wheel. Also, the structure of the suspension apparatus of this embodiment may be applied to some of a plurality of suspension apparatuses of a vehicle.

## Claims

1. A suspension apparatus (10, 20) which is arranged between a sprung member (2) and an unsprung member (3, 4), the suspension apparatus (10, 20) comprising:
a damping unit (12, 22) configured to generate a damping force between the sprung member (2) and the unsprung member (3, 4); and
a damping force control unit (40) configured to control the damping force that is generated by the damping unit (12, 22),
wherein the damping force control unit (40) is configured to control the damping force that is generated by the damping unit (12, 22) such that, on a lower limit boundary line (Q) drawn by a lower limit value of the damping force in a relationship between a relative movement speed between the sprung member (2) and the unsprung member (3, 4) and the damping force, in a case in which a speed range of the movement speed is divided into three ranges of a low-speed range (P1), a medium-speed range (P2), and a high-speed range (P3), a ratio of increase in magnitude of the damping force with respect to change in the movement speed in the medium-speed range (P2) is larger than a ratio of increase in magnitude of the damping force with respect to change in the movement speed in each of the other speed ranges, **characterized, in that** the lower limit boundary line (Q) in the low-speed range (P1) is minimum values of a damping force that can be generated by the damping unit (12, 22) and the lower limit boundary line (Q) in the high-speed range (P3) is values obtained by adding a predetermined amount to the minimum values.

2. The suspension apparatus (10, 20) according to claim 1,
wherein the damping force control unit (40)
further includes a damping force calculation unit (44) configured to calculate the damping force that is generated by the damping unit (12, 22), based on a plurality of parameters including at least the movement speed, and
is configured to compare a damping force that has been calculated by the damping force calculation unit (44) and a damping force on the lower limit boundary line (Q) with one another and to cause the damping unit (12, 22) to generate a damping force of a larger one of values of the damping forces.

3. The suspension apparatus (10, 20) according to claim 2,
wherein the damping force control unit (40)
is configured to control, if the damping force that has been calculated by the damping force calculation unit (44) is a value of the lower limit boundary line (Q) or higher, the damping force that is generated by the damping unit (12, 22) such that the damping force is the calculated damping force, and to control, on the other hand, if the damping force that has been calculated by the damping force calculation unit (44) is a value that is lower than the lower limit boundary line (Q), the damping force that is generated by the damping unit (12, 22) such that the damping force is the damping force on the lower limit boundary line (Q).

4. The suspension apparatus (10, 20) according to claim 2 or 3, further comprising:
a sprung acceleration detection unit (5, 6) configured to detect acceleration of the sprung member (2) in a gravity direction,
wherein the damping force calculation unit (44) is configured to calculate the damping force, based on an output value of the sprung acceleration detection unit (5, 6).

5. The suspension apparatus (10, 20) according to any one of claims 1 to 4,
wherein the damping force control unit (40) is configured to control the damping force that is generated by the damping unit (12, 22) such that there are two or more inflection points on the lower limit boundary line (Q).

6. The suspension apparatus (10, 20) according to any one of claims 1 to 5,
wherein the damping force control unit (40) is configured to control the damping force that is generated by the damping unit (12, 22) both at a time of compression when a distance between the sprung member (2) and the unsprung member (3, 4) is relatively short and at a time of extension when the distance between the sprung member (2) and the unsprung member (3, 4) is relatively long.

7. The suspension apparatus (10, 20) according to claim 6,
wherein the predetermined amount is set to a larger value as the movement speed increases.

8. The suspension apparatus (10, 20) according to any one of claims 1 to 7,
wherein the medium-speed range (P2) is narrower than the high-speed range (P3).

9. The suspension apparatus (10, 20) according to any one of claims 1 to 8,
wherein the medium-speed range (P2) is narrower than the low-speed range (P1).

10. A vehicle (1) comprising:
the suspension apparatus (10, 20) according to any one of claims 1 to 9.

11. A vehicle (1) comprising:
the suspension apparatus (10, 20) according to claim 2,
wherein the plurality of parameters in the suspension apparatus (10, 20) includes a parameter related to a vehicle traveling status.

12. The vehicle (1) according to claim 11,
wherein the vehicle traveling status includes at least one of a vehicle speed, presence or absence of an accelerator operation, an accelerator operation amount, presence or absence of a brake operation, or a brake operation amount.

## Patentansprüche

1. Eine Aufhängungsvorrichtung (10, 20), die zwischen einem gefederten Bauglied (2) und einem ungefederten Bauglied (3, 4) angeordnet ist, wobei die Aufhängungsvorrichtung (10, 20) folgendes Merkmal aufweist:
eine Dämpfungseinheit (12, 22), die dazu konfiguriert ist, eine Dämpfungskraft zwischen dem gefederten Bauglied (2) und dem ungefederten Bauglied (3, 4) zu erzeugen; und
eine Dämpfungskraft-Steuereinheit (40), die dazu konfiguriert ist, die durch die Dämpfungseinheit (12, 22) erzeugte Dämpfungskraft zu steuern,
wobei die Dämpfungskraft-Steuereinheit (40) dazu konfiguriert ist, die durch die Dämpfungseinheit (12, 22) erzeugte Dämpfungskraft derart zu steuern, dass auf einer unteren Grenzlinie (Q), gezogen durch einen unteren Grenzwert der Dämpfungskraft in Beziehung zwischen einer relativen Bewegungsgeschwindigkeit zwischen dem gefederten Bauglied (2) und dem ungefederten Bauglied (3, 4) und der Dämpfungskraft, in einem Fall, in dem ein Geschwindigkeitsbereich der Bewegungsgeschwindigkeit in drei Bereiche eines Niedriggeschwindigkeitsbereichs (P1), eines Mittelgeschwindigkeitsbereichs (P2) und eines Hochgeschwindigkeitsbereichs (P3) unterteilt ist, ein Verhältnis der Größenzunahme der Dämpfungskraft in Bezug auf eine Änderung der Bewegungsgeschwindigkeit in dem Mittelgeschwindigkeitsbereich (P2) größer ist als ein Verhältnis der Größenzunahme der Dämpfungskraft in Bezug auf eine Änderung der Bewegungsgeschwindigkeit in jedem der anderen Geschwindigkeitsbereiche,
**dadurch gekennzeichnet, dass**
die untere Grenzlinie (Q) in dem Niedriggeschwindigkeitsbereich (P1) Minimalwerten einer Dämpfungskraft entspricht, die durch die Dämpfungseinheit (12, 22) erzeugt werden können, und die untere Grenzlinie (Q) in dem Hochgeschwindigkeitsbereich (P3) Werten entspricht, die durch Hinzufügen eines vorbestimmten Betrags zu den Minimalwerten erhalten werden.

2. Die Aufhängungsvorrichtung (10, 20) gemäß Anspruch 1,
wobei die Dämpfungskraft-Steuereinheit (40)
ferner eine Dämpfungskraft-Berechnungseinheit (44) umfasst, die dazu konfiguriert ist, die durch die Dämpfungseinheit (12, 22) erzeugte Dämpfungskraft basierend auf einer Mehrzahl von Parametern zu berechnen, die zumindest die Bewegungsgeschwindigkeit umfassen, und
dazu konfiguriert ist, eine Dämpfungskraft, die durch die Dämpfungskraft-Berechnungseinheit (44) berechnet wurde, und eine Dämpfungskraft auf der unteren Grenzlinie (Q) miteinander zu vergleichen und zu bewirken, dass die Dämpfungseinheit (12, 22) eine Dämpfungskraft eines größeren der Werte der Dämpfungskräfte erzeugt.

3. Die Aufhängungsvorrichtung (10, 20) gemäß Anspruch 2,
wobei die Dämpfungskraft-Steuereinheit (40)
dazu konfiguriert ist, falls die Dämpfungskraft, die durch die Dämpfungskraft-Berechnungseinheit (44) berechnet wurde, ein Wert der unteren Grenzlinie (Q) oder höher ist, die durch die Dämpfungseinheit (12, 22) erzeugte Dämpfungskraft derart zu steuern, dass die Dämpfungskraft die berechnete Dämpfungskraft ist, und andererseits, falls die Dämpfungskraft, die durch die Dämpfungskraft-Berechnungseinheit (44) berechnet wurde, ein Wert ist, der niedriger als die untere Grenzlinie (Q) ist, die durch die Dämpfungseinheit (12, 22) erzeugte Dämpfungskraft derart zu steuern, dass die Dämpfungskraft die Dämpfungskraft auf der unteren Grenzlinie (Q) ist.

4. Die Aufhängungsvorrichtung (10, 20) gemäß Anspruch 2 oder 3, die ferner folgendes Merkmal aufweist:
eine Gefederte-Beschleunigung-Erfassungseinheit (5, 6), die dazu konfiguriert ist, eine Beschleunigung des gefederten Bauglieds (2) in einer Schwerkraftrichtung zu erfassen,
wobei die Dämpfungskraft-Berechnungseinheit (44) dazu konfiguriert ist, die Dämpfungskraft auf Basis eines Ausgabewerts der Gefederte-Beschleunigung-Erfassungseinheit (5, 6) zu berechnen.

5. Die Aufhängungsvorrichtung (10, 20) gemäß einem der Ansprüche 1 bis 4,
wobei die Dämpfungskraft-Steuereinheit (40) dazu konfiguriert ist, die durch die Dämpfungseinheit (12, 22) erzeugte Dämpfungskraft derart zu steuern, dass zwei oder mehr Wendepunkte auf der unteren Grenzlinie (Q) vorhanden sind.

6. Die Aufhängungsvorrichtung (10, 20) gemäß einem der Ansprüche 1 bis 5,
wobei die Dämpfungskraft-Steuereinheit (40) dazu konfiguriert ist, die durch die Dämpfungseinheit (12, 22) erzeugte Dämpfungskraft sowohl zu einem Verdichtungszeitpunkt, wenn dem ein Abstand zwischen dem gefederten Bauglied (2) und dem ungefederten Bauglied (3, 4) relativ gering ist, als auch zu einem Ausdehnungszeitpunkt, an dem der Abstand zwischen dem gefederten Bauglied (2) und dem ungefederten Bauglied (3, 4) relativ groß ist, zu steuern.

7. Die Aufhängungsvorrichtung (10, 20) gemäß Anspruch 6,
wobei der vorbestimmte Betrag bei zunehmender Bewegungsgeschwindigkeit auf einen größeren Wert gesetzt wird.

8. Die Aufhängungsvorrichtung (10, 20) gemäß einem der Ansprüche 1 bis 7,
wobei der Mittelgeschwindigkeitsbereich (P2) enger als der Hochgeschwindigkeitsbereich (P3) ist.

9. Die Aufhängungsvorrichtung (10, 20) gemäß einem der Ansprüche 1 bis 8, wobei der Mittelgeschwindigkeitsbereich (P2) enger als der Niedriggeschwindigkeitsbereich (P1) ist.

10. Ein Fahrzeug (1), das folgendes Merkmal aufweist:
die Aufhängungsvorrichtung (10, 20) gemäß einem der Ansprüche 1 bis 9.

11. Ein Fahrzeug (1), das folgendes Merkmal aufweist:
die Aufhängungsvorrichtung (10, 20) gemäß Anspruch 2,
wobei die Mehrzahl von Parametern in der Aufhängungsvorrichtung (10, 20) einen Parameter umfasst, der sich auf einen Fortbewegungszustand des Fahrzeugs bezieht.

12. Das Fahrzeug (1) gemäß Anspruch 11,
wobei der Fortbewegungszustand des Fahrzeugs zumindest eines einer Fahrzeuggeschwindigkeit, eines Vorhandenseins oder Nichtvorhandenseins eines Beschleunigungsvorgangs, eines Beschleunigerbetätigungsbetrags, eines Vorhandenseins oder Nichtvorhandenseins eines Bremsvorgangs oder eines Bremsbetätigungsbetrags ist.

## Revendications

1. Appareil de suspension (10, 20) qui est disposé entre un élément suspendu (2) et un élément non suspendu (3, 4), l'appareil de suspension (10, 20) comprenant:
une unité d'amortissement (12, 22) configurée pour générer une force d'amortissement entre l'élément suspendu (2) et l'élément non suspendu (3, 4); et
une unité de régulation de force d'amortissement (40) configurée pour réguler la force d'amortissement générée par l'unité d'amortissement (12, 22),
dans lequel l'unité de régulation de force d'amortissement (40) est configurée pour réguler la force d'amortissement qui est générée par l'unité d'amortissement (12, 22) de sorte que, sur une ligne de limite inférieure (Q) tracée par une valeur limite inférieure de la force d'amortissement dans un rapport entre une vitesse de déplacement relative entre l'élément suspendu (2) et l'élément non suspendu (3, 4) et la force d'amortissement au cas où une plage de vitesse de la vitesse de déplacement est divisée en trois plages, une plage de faible vitesse (P1), une plage de vitesse moyenne (P2) et une plage de grande vitesse (P3), un rapport d'augmentation de l'amplitude de la force d'amortissement par rapport à la variation de la vitesse de déplacement dans la plage de vitesse moyenne (P2) est supérieur à un rapport d'augmentation de l'amplitude de la force d'amortissement par rapport à la variation de la vitesse de déplacement dans chacune des autres plages de vitesse,
**caractérisé par le fait que**
la ligne de limite inférieure (Q) dans la plage de faible vitesse (P1) correspond aux valeurs minimales d'une force d'amortissement qui peut être générée par l'unité d'amortissement (12, 22) et la ligne de limite inférieure (Q) dans la plage de grande vitesse (P3) correspond aux valeurs obtenues en ajoutant une quantité prédéterminée aux valeurs minimales.

2. Appareil de suspension (10, 20) selon la revendication 1,
dans lequel l'unité de régulation de force d'amortissement (40)
comporte par ailleurs une unité de calcul de force d'amortissement (44) configurée pour calculer la force d'amortissement qui est générée par l'unité d'amortissement (12, 22), sur base d'une pluralité de paramètres comportant au moins la vitesse de déplacement, et
est configurée pour comparer entre elles une force d'amortissement qui a été calculée par l'unité de calcul de force d'amortissement (44) et une force d'amortissement sur la ligne de limite inférieure (Q) et pour amener l'unité d'amortissement (12, 22) à générer un force d'amortissement à la plus grande des valeurs des forces d'amortissement.

3. Appareil de suspension (10, 20) selon la revendication 2,
dans lequel l'unité de régulation de force d'amortissement (40)
est configurée pour réguler, si la force d'amortissement qui a été calculée par l'unité de calcul de force d'amortissement (44) est une valeur de la ligne de limite inférieure (Q) ou supérieure, la force d'amortissement qui est générée par l'unité d'amortissement (12, 22) de sorte que la force d'amortissement soit la force d'amortissement calculée, et pour réguler, d'autre part, si la force d'amortissement qui a été calculée par l'unité de calcul de la force d'amortissement (44) est une valeur qui est inférieure à la ligne de limite inférieure (Q), la force d'amortissement qui est générée par l'unité d'amortissement (12, 22) de sorte que la force d'amortissement soit la force d'amortissement sur la ligne de limite inférieure (Q).

4. Appareil de suspension (10, 20) selon la revendication 2 ou 3, comprenant par ailleurs:
une unité de détection d'accélération d'élément suspendu (5, 6) configurée pour détecter l'accélération de l'élément suspendu (2) dans une direction de la gravité,
dans lequel l'unité de calcul de la force d'amortissement (44) est configurée pour calculer la force d'amortissement sur base d'une valeur de sortie de l'unité de détection d'accélération d'élément suspendu (5, 6).

5. Appareil de suspension (10, 20) selon l'une quelconque des revendications 1 à 4,
dans lequel l'unité de régulation de force d'amortissement (40) est configurée pour réguler la force d'amortissement qui est générée par l'unité d'amortissement (12, 22) de sorte qu'il y ait deux points d'inflexion ou plus sur la ligne de limite inférieure (Q).

6. Appareil de suspension (10, 20) selon l'une quelconque des revendications 1 à 5,
dans lequel l'unité de régulation de force d'amortissement (40) est configurée pour réguler la force d'amortissement qui est générée par l'unité d'amortissement (12, 22) tant à un moment de compression lorsqu'une distance entre l'élément suspendu (2) et l'élément non suspendu (3, 4) est relativement courte qu'à un moment d'extension lorsque la distance entre l'élément suspendu (2) et l'élément non suspendu (3, 4) est relativement longue.

7. Appareil de suspension (10, 20) selon la revendication 6,
dans lequel la quantité prédéterminée est réglée à une valeur supérieure au fur et à mesure que la vitesse de déplacement augmente.

8. Appareil de suspension (10, 20) selon l'une quelconque des revendications 1 à 7,
dans lequel la plage de vitesse moyenne (P2) est plus étroite que la plage de grande vitesse (P3).

9. Appareil de suspension (10, 20) selon l'une quelconque des revendications 1 à 8,
dans lequel la plage de vitesse moyenne (P2) est plus étroite que la plage de faible vitesse (P1).

10. Véhicule (1), comprenant:
l'appareil de suspension (10, 20) selon l'une quelconque des revendications 1 à 9.

11. Véhicule (1), comprenant:
l'appareil de suspension (10, 20) selon la revendication 2,
dans lequel la pluralité de paramètres dans l'appareil de suspension (10, 20) comporte un paramètre relatif à un état de déplacement du véhicule.

12. Véhicule (1) selon la revendication 11,
dans lequel l'état de déplacement du véhicule comporte au moins l'une parmi la vitesse du véhicule, la présence ou l'absence d'une opération de l'accélérateur, une quantité d'opération de l'accélérateur, la présence ou l'absence d'une opération de freinage, ou une quantité de l'opération de freinage.
